# EUROPÄISCHE PATENTSCHRIFT

(11) **EP 2 452 098 B1**
(45) Veröffentlichungstag und Bekanntmachung des Hinweises auf die Patenterteilung: **11.09.2013**
(21) Anmeldenummer: 10739501.4
(22) Anmeldetag: 05.07.2010
(51) Int. Cl.: F16H 3/00, F16H 61/688, F16H 61/04, F16D 23/06

(54) **DOPPELKUPPLUNGSGETRIEBE UND VERFAHREN ZUR STEUERUNG EINES DOPPELKUPPLUNGSGETRIEBES**
DUAL CLUTCH TRANSMISSION AND METHOD FOR CONTROLLING A DUAL CLUTCH TRANSMISSION
TRANSMISSION À DOUBLE EMBRAYAGE ET PROCÉDÉ DE COMMANDE D'UNE TRANSMISSION À DOUBLE EMBRAYAGE

(30) Priorität: 06.07.2009 DE 102009031788
(43) Veröffentlichungstag der Anmeldung: 16.05.2012
(73) Patentinhaber: Volkswagen Aktiengesellschaft, 38440 Wolfsburg (DE)
(72) Erfinder: NEUDÖRFER, Sascha, 30519 Hannover (DE); BOTHE, Edgar, 31224 Peine (DE)
(86) Internationale Anmeldenummer: PCT/EP2010/003987
(87) Internationale Veröffentlichungsnummer: WO 2011/003545

(56) Entgegenhaltungen:
- EP-A1- 1 077 336
- DE-A1- 10 133 695
- DE-A1- 10 232 836
- DE-A1- 10 253 616
- DE-A1-102005 059 529
- DE-A1-102006 040 464

## Beschreibung

Die Erfindung betrifft ein Doppelkupplungsgetriebe für ein Kraftfahrzeug, mit einer ersten und mit einer zweiten Getriebeeingangswelle sowie mit mindestens einer Triebwelle, insbesondere mit einer ersten und mit einer zweiten Triebwelle, wobei der ersten Getriebeeingangswelle eine erste Reibkupplung und bestimmte Gangstufen, vzw. eine erste, eine dritte, eine fünfte und/oder eine siebte Gangstufe, zugeordnet sind und der zweiten Getriebeeingangswelle eine zweite Reibkupplung und bestimmte andere Gangstufen, vzw. eine zweite, eine vierte und/oder eine sechste Gangstufe zugeordnet sind, wobei die Gangstufen durch mehrere jeweils die Getriebeeingangswelle und die Triebwelle verbindende Zahnradpaare gebildet sind, wobei die Zahnradpaare durch jeweils ein Festrad und ein Losrad gebildet sind, wobei jedem den Losrädern eine Synchronisiereinrichtung zugeordnet ist, und wobei die Synchronisiereinrichtungen mehrere zusammenwirkende Reibflächen aufweisen.

Weiterhin betrifft die Erfindung ein Verfahren zur Steuerung eines Doppelkupplungsgetriebes, wobei das Doppelkupplungsgetriebe eine erste und eine zweite Getriebeeingangswelle sowie mindestens eine Triebwelle, insbesondere eine erste und eine zweite Triebwelle aufweist, wobei der ersten Getriebeeingangswelle eine erste Reibkupplung und bestimmte Gangstufen, vzw. eine erste, eine dritte, eine fünfte und/oder eine siebte Gangstufe, zugeordnet sind und der zweiten Getriebeeingangswelle eine zweite Reibkupplung und bestimmte andere Gangstufen, vzw. eine zweite, eine vierte und/oder eine sechste Gangstufe zugeordnet sind, wobei die Gangstufen durch mehrere jeweils die Getriebeeingangswelle und die Triebwelle verbindende Zahnradpaare gebildet sind, wobei die Zahnradpaare durch jeweils ein Festrad und ein Losrad gebildet sind, wobei mehrere Synchronisiereinrichtungen den Losrädern zugeordnet sind, wobei die Synchronisiereinrichtungen mehrere zusammenwirkende Reibflächen aufweisen, und wobei beim Hochschalten der unteren Gangstufen zur Synchronisierung der jeweiligen Getriebeeingangsweiie eine einer anderen, höheren Gangstufe zugeordnete Synchronisiereinrichtung eingesetzt bzw. verwendet wird.

Aus der DE 44 36 526 A1 ist ein Doppelkupplungsgetriebe für ein Kraftfahrzeug bekannt. Das Doppelkupplungsgetriebe weist zwei Getriebeeingangswellen und eine einzige Triebwelle auf, wobei den beiden Getriebeeingangswellen jeweils eine Reibkupplung zugeordnet ist. Die Getriebeeingangswellen sind konzentrisch zueinander angeordnet. Insgesamt sechs Gangstufen die Vorwärtsfahrt werden durch Zahnradpaare gebildet, wobei die

Getriebeeingangswellen und die Triebwelle durch die Zahnradpaare miteinander verbunden sind. Die den Gangstufen zugeordneten Losräder werden durch formschlüssige Schaltkupplungen geschaltet. Die Schaltkupplungen sind mit Klauenverzahnungen als formschlüssige Kraftübertragungselemente ausgerüstet. Zusätzlich zu der Triebwelle ist eine Synchronisierungswelle vorgesehen, die sich mit der gleichen Drehzahl wie die äußere Eingangswelle dreht. Die Synchronisierungswelle steht ferner mit der inneren Getriebeeingangswelle über mehrere Synchronisierungs-Zahnradpaare in Verbindung, wobei jedes der Synchronisierungs-Zahnradpaare mit jeweils einer zugeordneten Synchronisierungskupplung drehfest mit der inneren Getriebeeingangswelle oder der Synchronisierungswelle in Eingriff bringbar ist.

Aus der DE 197 25 512 A1 ist ein synchronisiertes, mehrgängiges Stirnradgetriebe mit einer Anfahrkupplung und einer Vorgelegewelle sowie einer Hauptwelle bekannt. Die Hauptwelle und die Vorgelegewelle sind über Zahnradpaare miteinander verbunden. Auf der Hauptwelle ist eine doppeltwirkende Reibungskupplung zwischen zwei Losrädern angeordnet. Das eine Losrad ist dabei einem Anfahrgang zugeordnet und das andere Losrad ist dem Rückwärtsgang zugeordnet. Die Reibungskupplung kann zum einen mit dem Losrad des Anfahrganges und der Hauptwelle verbunden werden, wodurch die primärseitigen Teile des Getriebes beschleunigt werden. Zum anderen ist durch diese Reibungskupplung eine Verbindung zwischen dem Losrad des Rückwärtsganges und der Hauptwelle möglich, wodurch die primärseitigen rotierenden Getriebeteile abgebremst werden. Die Verschiebung der Reibungskupplung erfolgt mit Hilfe eines Schaltzylinders. Die Reibungskupplung ist als Synchronisierungskupplung mit einem Reibkonus ausgebildet sein. Ferner sind weitere Zahnradpaare der Vorgelegewelle und der Hauptwelle zugeordnet, wobei die Losräder jeweils über Klauenkupplungen mit der Hauptwelle des Getriebes verbindbar sind.

Aus der DE 601 02 807 T2 ist ein Doppelkupplungsgetriebe für ein Kraftfahrzeug mit einer ersten und mit einer zweiten Getriebeeingangswelle bekannt. Das Doppelkupplungsgetriebe weist ferner zwei Triebwellen auf. Den Triebwellen zugeordnete Losräder sind mit der Hilfe von axial verschiebbaren Betätigungshülsen verriegelbar. Die Betätigungshülsen wirken ohne Synchronisiereinrichtungen mit den Losrädern zusammen. Stattdessen wird eine zentrale Synchronisiervorrichtung eingesetzt. Die zentrale Synchronisiervorrichtung weist ein Paar von Synchronisierzahnrädern mit unterschiedlichen Durchmessern auf, die rotierbar an der ersten Triebwelle montiert sind. Die Synchronisierzahnräder stehen in antreibenden Eingriff mit Zahnringen an einer der Getriebeeingangswellen. Die zentrale Synchronisiervorrichtung weist ferner eine Reibungseinrichtung auf, mittels derer eine Antriebsverbindung zwischen einem der Synchronisierzahnräder und der ersten Triebwelle hergestellt werden kann, um die Drehzahl der ersten Triebwelle entsprechend anzupassen. Die Reibungseinrichtung ist als Scheibenkupplung ausgebildet.

Aus der DE 103 61 333 A1 ist ein zentral synchronisiertes, automatisches Wechselgetriebe bekannt. Die verwendeten Schaltkupplungen zum formschlüssigen Ein- und Auslegen von Gangstufen kommen ohne eigene Synchronisiereinrichtungen aus. Zum Synchronisieren des Zielganges bei einem Gangwechsel wird eine zentrale Reibkupplung verwendet. Das Wechselgetriebe weist eine Getriebeeingangswelle, einen Haupt-Getriebezweig und einen hierzu parallelen Hilfs-Getriebezweig und eine Ausgangswelle auf. Der Haupt-Getriebezweig weist eine Mehrzahl von Radsätzen zur Einrichtung unterschiedlicher Gangstufen auf. Der Hilfs-Getriebezweig weist wenigstens einen Synchronisierungs-Radsatz zur zentralen Synchronisierung auf. Die Radsätze des Haupt-Getriebezweiges und des Hilfs-Getriebezweiges weisen jeweils ein Losrad und ein damit kämmendes Festrad auf und sind mit der Ausgangswelle verbunden. Der Haupt-Getriebezweig ist unmittelbar oder über eine Haupt-Schaltkupplung mit der Getriebeeingangswelle verbunden. Der Hilfs-Getriebezweig ist über eine Reibkupplung mit der Getriebeeingangswelle verbunden, die zum zentralen Synchronisieren beim Wechseln von Gangstufen des Haupt-Getriebezweiges eingerichtet ist.

Aus der DE 198 53 824 A1 ist ein Doppelkupplungsgetriebe für ein Kraftfahrzeug bekannt. Das Doppelkupplungsgetriebe weist zwei Getriebeeingangswellen sowie eine einzelne Triebwelle bzw. Vorgelegewelle auf. Jeder der Getriebeeingangswellen ist eine Reibkupplung zugeordnet. Der ersten Getriebeeingangswelle ist eine erste, eine zweite, eine dritte, eine fünfte Gangstufe sowie ein Rückwärtsgang zugeordnet. Der zweiten Getriebeeingangswelle ist eine vierte Gangstufe zugeordnet. Die erste Gangstufe und der Rückwärtsgang sowie die zweite und dritte Gangstufe sind dabei mittels Klauenkupplungen schaltbar. Die fünfte und sechste Gangstufe ist mittels einer Synchronisiereinrichtung schaltbar. Die Drehzahlangleichung zum Schalten der Klauenkupplung erfolgt über Betätigung der Reibkupplung und ggf. über eine Einflussnahme des Fahrzeugmotors. Da bei diesem Doppelkupplungsgetriebe benachbarte Gangstufen teilweise derselben Getriebeeingangswelle zugeordnet sind, kommt es zu einer Zugkraftunterbrechung beim Schalten zwischen diesen benachbarten Gangstufen.

Aus der DE 102 53 616 A1 ist ein Doppelkupplungsgetriebe und ein Verfahren der eingangs genannten Art bekannt, welches die Merkmale der Oberbegriffe der Ansprüche 1, 5 und 15 enthält. Das Doppelkupplungsgetriebe weist zwei Getriebeeingangswellen, mehrere Gangstufen, Zahnräder und mehrere Synchronisiereinrichtungen auf, wobei die Synchronisiereinrichtungen den Gangstufen zugeordnet sind. Jeder Getriebeeingangswelle ist eine separate Reibkupplung und eine Gruppe von Gangstufen zugeordnet. Ferner ist eine Synchronisierungssteuerung vorgesehen, welche beim Einlegen einer Gangstufe zur Synchronisierung von deren Getriebeeingangswelle.eine einer anderen Gangstufe zugeordnete Synchronisiereinrichtung ansteuert. Hierbei wird beim Einlegen einer niedrigeren Gangstufe eine einer anderen, niedrigeren Gangstufe zugeordnete Synchronisiereinrichtung angesteuert. Entsprechend wird beim Einlegen einer höheren Gangstufe eine einer anderen, höheren Gangstufe zugeordnete Synchronisiereinrichtung angesteuert. Bspw. wird beim Schalten von der ersten in die zweite Gangstufe die zugehörige Getriebeeingangswelle mit der Synchronisiereinrichtung der vierten Gangstufe oder mit der Synchronisierseinrichtung der sechsten Gangstufe synchronisiert.

Die im Stand der Technik bekannten Doppelkupplungsgetriebe und Verfahren sind noch nicht optimal ausgebildet. Der Einsatz von Klauenkupplungen hat den Nachteil, dass laute Schaltgeräusche auftreten können, wenn die Kupplungsklauen ineinander greifen und die Differenzdrehzahl der beteiligten Bauteile schlagartig abgebaut wird. Durch das schlagartige Abbauen der Differenzdrehzahl kann sich die Geschwindigkeit des Fahrzeuges ruckartig ändern. Der Einsatz von Synchronisiereinrichtungen erfordert eine gewisse Anzahl von Bauteilen und verursacht daher entsprechende Kosten sowie erfordert einen großen Bauraum.

Der Erfindung liegt daher die Aufgabe zugrunde, ein Doppelkupplungsgetriebe sowie ein Verfahren zur Steuerung eines Döppelkupplungsgetriebes derart auszugestalten und weiterzubilden, so dass ein unkomfortables Schaltverhalten auf einfache und kostengünstige Weise vermieden wird.

Die zuvor aufgezeigte Aufgabe wird nun für das Doppelkupplungsgetriebe zunächst dadurch gelöst, dass für die beiden größten Gangstufen, vzw. für die sechste und siebte Gangstufe jeweils eine Mehrfach-Synchronisiereinrichtung als Synchronisierseinrichtung und für die unteren Gangstufen eine Einfach-Synchronisiereinrichtung als Synchronisiereinrichtung vorgesehen sind. Jede Mehrfach-Synchronisiereinrichtung weist mehrere zusammenwirkende Reibflächenpaare und jede Einfach-Synchronisiereinrichtung ein zusammenwirkendes Reibflächenpaar auf. Die für die unteren - vzw. für die erste bis fünfte - Gangstufen vorgesehenen Einfach-Synchronisiereinrichtungen führen zu einer Verbesserung bei Schaltvorgängen als keine Syrichronisiereinrichtungen bzw. Klauenkupplungen. Die eine der Mehrfach-Synchronisiereinrichtungen ist dabei funktional der einen Getriebeeingangswelle und die andere Mehrfach-Synchronisiereinrichtung ist funktional der anderen Getriebeeingangswelle zugeordnet. Hierdurch wird auch ein komfortables Hochschaltverhalten erreicht, wobei Bauteile und Kosten eingespart sind, da die Synchronisiereinrichtungen für die unteren Gänge als Einfach-Synchronisiereinrichtung ausgeführt sind. Dadurch, dass für die Hochschaltvorgänge die Mehrfach-Synchronisiereinrichtung verwendet werden, ist auch die Beanspruchung der Einfach-Synchronisiereinrichtung reduziert. Hohe Kosten für Mehrfach-Synchronisiereinrichtung der unteren Gänge sind so vermieden. Zum Rückschalten werden die Einfach-Synchronisiereinrichtung und/oder mindestens eine der Reibkupplungen eingesetzt, wobei zum Hochschalten die jeweiligen Getriebeeingangswelle funktional wirksam mit der entsprechenden Mehrfach-Synchronisiereinrichtung abgebremst wird. Hierdurch ist eine einfachere und kostengünstigere Synchronisiereinrichtung bzw. Synchronisierung bereitgestellt bzw. realisiert.

Die zuvor aufgezeigte Aufgabe wird nun für das Doppelkupplungsgetriebe ferner dadurch gelöst, dass mindestens eine der Reibflächen der Synchronisiereinrichtung für die beiden größten Gangstufen, vorzugsweise für die sechste und siebte Gangstufe Carbon aufweist und mindestens eine der Reibflächen der Synchronisiereinrichtung für die unteren Gangstufen, vorzugsweise für die erste bis fünfte Gangstufe Messing aufweist. Die vorzugsweise für alle , insbesondere für die erste bis siebte Gangstufe vorgesehenen Einfach-Synchronisiereinrichtungen führen zu einer Verbesserung bei Schaltvorgängen als keine Synchronisiereinrichtungen bzw. Klauenkupplungen. Eine der beiden Synchronisiereinrichtungen mit den Carbon-Reibflächen ist dabei der einen Getriebeeingangswelle und die andere Synchronisiereinrichtung mit den Carbon-Reibflächen ist der anderen Getriebeeingangswelle zugeordnet. Hierdurch ist ein komfortables Hochschaltverhalten erreicht, wobei Bauteile und Kosten eingespart sind, da die Synchronisiereinrichtung für die unteren Gänge als Einfach-Synchronisiereinrichtung mit Messing-Reibflächen ausgeführt sind. Dadurch, dass für die Hochschaltvorgänge die Synchronisiereinrichtung mit den Carbon-Reibflächen verwendet werden, ist die Beanspruchung der Synchronisiereinrichtungen mit den Messing-Reibflächen reduziert. Kosten für die Synchronisiereinrichtungen der unteren Gangstufen sind, da diese keine Carbon-Flächen aufweisen, so vermieden. Hierdurch ist eine einfachere, kostengünstige Synchronisiereinrichtung bereitgestellt.

Die zuvor aufgezeigte Aufgabe wird nun für das Verfahren dadurch gelöst, dass beim Hochschalten der unteren Gangstufen zur Synchronisierung der jeweiligen Getriebeeingangswelle eine der beiden Synchronisiereinrichtungen der beiden höchsten Gangstufen eingesetzt bzw. verwendet wird. Beim Runterschalten wird vorzugsweise die jeweilige der zu schaltenden Gangstufe zugeordnete Synchronisiereinrichtung und/oder mindestens eine der Reibkupplungen verwendet. Über die Einfach-Synchronisiereinrichtungen und/oder die Reibkupplungen können die Rückschaltungen erfolgen, bei denen die jeweiligen Getriebeeingangswellen beschleunigt werden müssen. Bei Hochschaltungen liegt die Synchrondrehzahl der jeweiligen - zu aktivierten - Getriebeeingangswelle niedriger als die Istdrehzahl der aktuell geschalteten Getriebeeingangswelle, d. h. die jeweilige - zu aktivierende/ zu schaltende - Getriebeeingangswelle muss vorzugsweise abgebremst werden. Die Synchronisierung bei allen Hochschaltvorgängen kann daher auf komfortable Weise mit der jeweiligen Mehrfach-Synchronisiereinrichtung und/oder der jeweiligen Synchronisiereinrichtung mit Carbon-Reibfläche erreicht werden, die einer der beiden höchsten Gangstrufen zugeordnet ist. Die eingangs beschriebenen Nachteile sind daher vermieden und entsprechende Vorteile erzielt.

Es gibt nun eine Vielzahl von Möglichkeiten, die erfindungsgemäßen Doppelkupplungsgetriebe und das erfindungsgemäße Verfahren in vorteilhafter Art und Weise auszugestalten und weiterzubilden. Hierfür darf zunächst auf die dem Patentanspruch 1 und dem Patentanspruch 6 nachgeordneten Patentansprüche sowie auf Patentanspruch 16 verwiesen werden. Im folgenden wird nun eine bevorzugte Ausgestaltung der Erfindung anhand der Zeichnung und der dazugehörigen Beschreibung näher erläutert. In der Zeichnung zeigt:

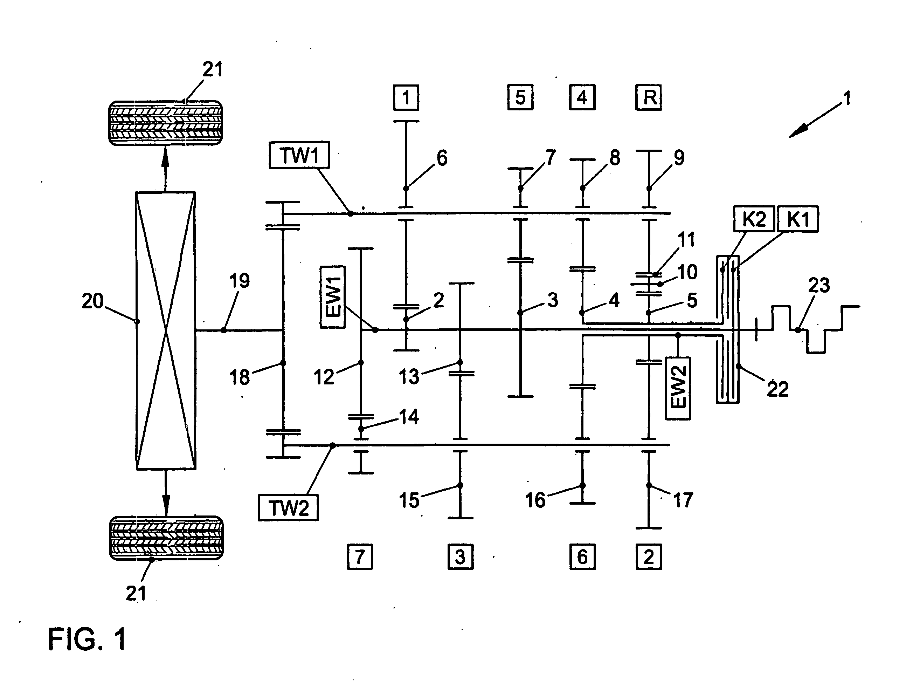

- Fig. 1: in einer schematischen Darstellung die wesentlichen Komponenten eines Doppelkupplungsgetriebes.

In Fig. 1 ist zumindest teilweise ein Doppelkupplungsgetriebe 1 für ein hier nicht näher dargestelltes Kraftfahrzeug dargestellt.

Das Doppelkupplungsgetriebe 1 weist eine erste Getriebeeingangswelle EW1 und eine zweite Getriebeeingangswelle EW2 auf. Das Doppelkupplungsgetriebe 1 weist ferner eine erste Triebwelle TW1 und eine zweite Triebwelle TW2 auf. Der ersten Getriebeeingangswelle EW1 ist eine erste Reibkupplung K1 zugeordnet. Der zweiten Getriebeeingangswelle EW2 ist eine zweite Reibkupplung K2 zugeordnet. Die erste Getriebeeingangswelle EW1 ist mit der ersten Reibkupplung K1 wirksam verbunden oder verbindbar und die zweite Getrietieeingangswelle EW2 ist mit der zweiten Reibkupplung K2 wirksam verbindbar oder verbunden.

Die erste Reibkupplung K1, die erste Getriebeeingangswelle EW1 und die erste Triebwelle TW1 bilden einen nicht näher bezeichneten ersten Getriebezweig. Die zweite Reibkupplung K2, die zweite Getriebeeingangswelle EW2 und die zweite Triebwelle TW2 bilden einen nicht näher bezeichneten zweiten Getriebezweig.

Der ersten Getriebeeingangswelle EW1 sind bestimmte Gangstufen, vorzugsweise eine erste, eine dritte, eine fünfte und eine siebte Gangstufe, zugeordnet. Der ersten Getriebeeingangswelle EW1 sind vorzugsweise die ungerade Gangstufen zugeordnet. Der zweiten Getriebeeingangswelle EW2, die vorzugsweise als Hohlwelle ausgebildet ist und die erste Getriebeeingangswelle EW1 umgreift, sind bestimmte andere Gangstufen, nämlich hier eine zweite, eine vierte und eine sechste Gangstufe zugeordnet. Der zweiten Getriebeeingangswelle EW2 sind vorzugsweise die geraden Gangstufen zugeordnet. Der zweiten Getriebeeingangswelle EW2 ist ferner eine Rückwärtsgangstufe R zugeordnet. Die Bezeichnung "Gangstufe" bezieht sich im Rahmen der Anmeldung auf Gangstufen für die Vorwärtsfahrt. Die Gangstufe für den Rückwärtsgang wird durchgehend als Rückwärtsgangstufe R bezeichnet.

Den beiden Getriebeeingangswellen EW1 und EW2 sind Zahnräder zugeordnet. Diese Zahnräder sind vorzugsweise als Festräder 2 bis 5, 12, 13 ausgebildet, d.h. diese Zahnräder sind drehfest auf der jeweiligen Getriebeeingangswelle EW1 bzw. EW2 angeordnet.

Der ersten Triebwelle TW1 sind Zahnräder, nämlich vorzugsweise die Losräder 6 bis 9 zugeordnet. Diesen Losrädern 6 bis 9 sind entsprechende Synchronisiereinrichtungen (nicht dargestellt) zugeordnet. Die nicht dargestellten Synchronisiereinrichtungen passen die unterschiedliche Drehzahl der Losräder 6 bis 9 an die Drehzahl der ersten Triebwelle TW1 an. Mit den Synchronisiereinrichtungen ist eine drehfeste Verbindung zwischen dem jeweiligen Losrad 6,7,8,9 und der ersten Triebwelle TW1 herstellbar.

Der zweiten Triebwelle TW2 sind Zahnräder, nämlich vorzugsweise die Losräder 14 bis 17 zugeordnet. Diese Losrädern 14 bis 17 sind wiederum entsprechende Synchronisiereinrichtungen (nicht dargestellt) zugeordnet. Die nicht dargestellten Synchronisiereinrichtungen passen die unterschiedliche Drehzahl der Losräder 14 bis 17 an die Drehzahl der zweiten Triebwelle TW2 an. Mit den Synchronisiereinrichtungen ist eine drehfeste Verbindung zwischen dem jeweiligen Losrad 14, 15, 16, 17 und der zweiten Triebwelle TW2 herstellbar.

Das Doppelkupplungsgetriebe 1 weist sieben Gangstufen für die Vorwärtsfahrt auf. In andere Ausgestaltung kann das Doppelkupplungsgetriebe sechs (oder auch weniger) oder auch mehr als sieben Gangstufen für die Vorwärtsfahrt aufweisen. Zusätzlich weist das Doppelkupplungsgetriebe 1 eine Rückwärtsgangstufe R für die Rückwärtsfahrt auf.

Die Gangstufen sind durch die jeweiligen Getriebeeingangswelle EW1 bzw. EW2 und die zugehörige Triebwelle TW1 bzw. TW2 verbindende Zahnradpaare mit einen Festrad 2 bis 5 bzw. 12, 13 und mit einem kämmend eingreifenden Losrad 6 bis 9 und 14 bis 17 gebildet:
Die Gangstufen eins und fünf sind durch die erste Getriebeeingangswelle EW1 und die erste Triebwelle TW1 verbindende Zahnradpaare gebildet, wobei die Zahnradpaare jeweils durch das Festrad 2 bzw. 3 und das Losrad 6 bzw. 7 gebildet sind. Die Festräder 2 und 3 sind der ersten Getriebeeingangswelle EW1 zugeordnet.

Die vierte Gangstufe ist durch ein die zweite Getriebeeingangswelle EW2 und die erste Triebwelle TW verbindendes Zahnradpaar gebildet, nämlich durch das Festrad 4 und das Losrad 8. Die Rückwärtsgangstufe R ist dabei durch das Festrad 5 und das Losrad 9 gebildet, wobei das Festrad 5 und das Losrad 9 über eine Zwischenwelle 10 und einem dieser Zwischenwelle 10 zugeordneten Zahnrad 11 miteinander in Verbindung stehen. Die Festräder 4 und 5 sind der zweiten Getriebeeingangswelle EW2 zugeordnet.

Die Gangstufen drei und sieben sind durch die erste Getriebeeingangswelle EW1 und die zweite Triebwelle TW2 verbindende Zahnradpaare gebildet, wobei die Zahnradpaare jeweils durch eines der Festräder 12 bzw. 13 und eines der Losräder 14 bzw. 15 gebildet sind. Das Festrad 12 bildet mit dem weiteren Losrad 14 ein Zahnradpaar für eine siebte Gangstufe. Das Festrad 13 bildet mit dem weiteren Losrad 15 ein Zahnradpaar für eine dritte Gangstufe.

Die Gangstufen sechs und zwei sind durch die zweite Getriebeeingangswelle EW2 und die zweite Triebwelle TW2 verbindende Zahnradpaare gebildet, wobei die Zahnradpaare jeweils durch eines der Festräder 4 bzw. 5 und eines der Losräder 16 bzw. 17 gebildet sind.

Das Doppelkupplungsgetriebe 1 weist ferner ein Achsabtriebsrad 18 auf, wobei das Achsabtriebsrad 18 drehfest mit einem Achsabtrieb 19 verbunden ist. Der Achsabtrieb 19 ist mit einem Differentialgetriebe 20 verbunden. Das Differentialgetriebe 20 überträgt das anliegende Drehmoment an die Antriebsräder 21, wie es hier schematisch durch die nicht näher bezeichneten Pfeile angedeutet ist. Die beiden Reibkupplungen K1 und K2 bilden eine Doppelkupplung 22, wobei die Doppelkupplung 22 mit einer Kurbelwelle 23 verbunden oder verbindbar ist.

Mehrere Synchronisiereinrichtungen (nicht dargestellt) sind den Losrädern 6 bis 9 bzw. 14 bis 17 zugeordnet, wobei die Synchronisiereinrichtungen mehrere zusammenwirkende Reibflächen (nicht dargestellt) aufweisen.

Die Gangstufen eins bis sieben sind mittels der nicht dargestellten Synchronisiereinrichtungen schaltbar. Jeweils zwei Synchronisiereinrichtungen sind vorzugsweise jeweils zwischen zwei benachbarten Losrädern 6 bis 9 bzw. 14 bis 17 angeordnet. Diese zwei Synchronisiereinrichtungen sind vorzugsweise zu einer Einheit mit einer gemeinsamen Schiebemuffe zusammengefasst. Vorzugsweise teilen sich die Gangstufen eins und fünf, drei und sieben, zwei und sechs, sowie vier und die Rückwärtsgangstufe R jeweils eine solche Einheit mit insbesondere jeweils einer Schiebemuffe.

Die eingangs beschriebenen Nachteile sind nun zunächst dadurch vermieden, dass für die beiden größten Gangstufen jeweils eine Mehrfach-Synchronisiereinrichtung als Synchronisiereinrichtung und für die unteren Gangstufen eine Einfach-Synchronisiereinrichtung als Synchronisiereinrichtung vorgesehen sind.

Zum Hochschalten können die Mehrfach-Synchronisiereinrichtungen eingesetzt werden wobei die jeweilige, zu aktivierende Getriebeeingangswelle EW1 bzw. EW2 funktional wirksam mit der jeweiligen Mehrfach-Synchronisiereinrichtung abgebremst werden kann. Die Einfach-Synchronisiereinrichtungen sind hier dadurch entlastet, dass nur Rückschaltvorgänge über die Einfach-Synchronisiereinrichtung vorgenommen werden, wobei die jeweiligen Getriebeeingangswellen EW1 bzw. EW2 beschleunigt werden müssen. Die Beschleunigung der Getriebeeingangswelle EW1 bzw. EW2 kann beim Runterschalten durch eine der Reibkupplungen K1, K2 zum Abbau der Differenzdrehzahl unterstützt werden. Es ist dabei insbesondere möglich, dem Hauptteil des Differenzdrehzahlunterschiedes über die Reibkupplung abzubauen und lediglich einen ggf. kleinen verbleibenden Differenzdrehzahlunterschied über die Synchronisiereinrichtung, insbesondere über die Einfachsynchronisierung abzubauen. Vorzugsweise werden die Getriebeeingangswellen EW1, EW2 entsprechend mit den Reibkupplungen derart beschleunigt, dass kein Differenzdrehzahlunterschied mehr besteht und die entsprechende Gangstufe über die Synchronisiereinrichtungen bei gleicher Drehzahl eingelegt werden kann.

Bei Hochschaltvorgängen muss die zugehörige Getriebeeingangswelle EW1 bzw. EW2 abgebremst werden, was über die den beiden größten Gangstufen zugeordneten Mehrfach-Synchronisiereinrichtungen erfolgen kann. Die Mehrfach-Synchronisiereinrichtungen entlasten daher besonders die Einfach-Synchronisiereinrichtungen.

Da hier sieben Vorwärtsgangstufen vorgesehen sind, sind für die sechste und siebte Gangstufe jeweils die Mehrfach-Synchronisiereinrichtung als Synchronisiereinrichtung vorgesehen und für die erste, zweite, dritte, vierte und fünfte Gangstufe ist jeweils eine Einfach-Synchronisiereinrichtung als Synchronisiereinrichtung vorgesehen.

Einfach-Synchronisiereinrichtungen weisen vorzugsweise einen Kupplungskörper mit einem Gegenkonus und einen Synchronring mit einem Reibkonus auf (nicht dargestellt). Die Einfach-Synchronisiereinrichtungen weisen vorzugsweise jeweils einen äußeren Synchronring und einen drehfest mit dem zugehörigen Losrad verbundenen Kupplungskörper mit einem Gegenkonus auf, wobei der Synchronring und der Gegenkonus zusammenwirkende Reibflächen aufweisen. Die Bauteile der Einfach-Synchronisiereinrichtung sind insbesondere ein Kupplungskörper mit einer Schaltverzahnung und mit dem Gegenkonus, der Synchronring mit dem Reibkonus und vorzugsweise mit einer Sperrverzahnung, ein Synchronkörper mit einer Innenverzahnung für den Formschluss mit der jeweiligen Triebwelle TW1, TW2 und mit einer Außenverzahnung für die Schiebemuffe sowie die Schiebemuffe. Der Synchronkörper und die Schiebemuffe sind in jeder Einheit nur einmal vorhanden, jeweils zweifach sind die Kupplungskörper und die Synchronringe in einer Einheit vorhanden, nämlich jeweils für eines für die beidseitig angeordneten Losräder.

Bei einem Schaltvorgang drückt die Schiebemuffe den Synchronring mittels der Sperrverzahnung an den Gegenkonus des Kupplungskörpers. Der Drehzahlunterschied zwischen dem Synchronring und dem Kupplungskörpers bewirkt durch die Reibung eine Angleichung der Drehzahl. Während der Angleichung der Drehzahl sperrt die Sperrverzahnung am Außenumfang des Synchronrings ein weiteres Schalten. Erst wenn Gleichlauf herrscht, lässt sich der Synchronring zurückdrehen und die Gangstufe kann geschaltet werden.

Die Mehrfach-Synchronisiereinrichtungen weisen im Unterschied zu den Einfach-Synchronisiereinrichtungen mehrere zusammenwirkende Reibflächenpaare auf. Die Mehrfach-Synchronisiereinrichtungen weisen vorzugsweise mehrere Reibkonen auf.

Als Mehrfach-Synchronisiereinrichtungen können insbesondere doppelt oder dreifach Synchronisiereinrichtungen bzw. "Doppelte- und Dreifach- Konen-Synchronisiereinrichtungen" verwendet werden. Mehrfach-Synchronisiereinrichtungen weisen zusätzliche Zwischenringe auf. Die Mehrfach-Synchronisiereinrichtungen weisen vorzugsweise einen inneren Synchronring und einen äußeren Synchronring sowie mindestens einen Zwischenring zwischen dem äußeren Synchronring und dem inneren Synchronring auf. Die Mehrfach-Synchronisiereinrichtungen sind vorzugsweise als Doppel-Synchronisiereinrichtungen ausgebildet. Die Doppel-Synchronisiereinrichtungen weisen vorzugsweise genau einen Zwischenring auf.

Mehrfach-Synchronisiereinrichtungen ermöglichen größere Reibkräfte, ein schnelles und leichtes Schalten sowie eine geringere Flächenpressung an den Reibflächen und damit einen geringeren Verschleiß als Einfach-Synchronisiereinrichtungen, sind aber aufwendiger und kostenintensiver herzustellen. Die Einfach-Synchronisiereinrichtungen für die unteren Gangstufen eins bis fünf bieten daher einen guten Kompromiss zwischen-Mehrfach-Synchronisiereinrichtungen und Klauenkupplungen.

Die Einfach-Synchronisiereinrichtungen sparen gegenüber den Mehrfach-Synchronisiereinrichtungen Kosten ein, bringen aber mehr Komfort als ein Verzicht auf Synchronisiereinrichtungen, wie bspw. bei Klauenkupplungen. Die Synchronisiereinrichtungen verhindern das ungewollte Gangeinlegen bei der Fahrt. Die Einfach-Synchronisiereinrichtung verschaffen der elektronischen Getriebesteuerung Zeit, um zu erkennen, dass eine ungewollte Gangstufe eingelegt werden soll. Die Einfach-Synchronisiereinrichtungen brauchen eine gewisse Zeitspanne, um das jeweilige Losrad 6 bis 9 bzw. 14 bis 17 mit der jeweiligen Triebwelle TW1 bzw. TW2 zu verbinden. In dieser Zeitspanne könnte bspw. die Elektronik eingreifen und verhindern, dass eine ungewollte Gangstufe eingelegt wird.

Vorzugsweise ist ferner ein Lock-System vorgesehen, wobei, wenn eine Gangstufe eingelegt ist, die anderen Gangstufen verriegelt sind. Wenn bspw. der erste Gang eingelegt ist, sind die anderen sechs Gangstufen und die Rückwärtsgangstufe R verriegelt.

Die eingangs beschriebenen Nachteile sind ferner dadurch vermieden, dass mindestens eine der Reibflächen der Synchronisiereinrichtung für die beiden größten Gangstufen Carbon aufweist und mindestens eine der Reibflächen der Synchronisiereinrichtung für die unteren Gangstufen Messing aufweist (nicht dargestellt). Dies hat den Vorteil, dass für die beiden größten Gangstufen vorzugsweise jeweils eine Einfach-Synchronisiereinrichtung als Synchronisiereinrichtung vorgesehen sein kann und dennoch ein unkomfortables Schaltverhalten auf einfache und kostengünstige Weise vermieden ist. Alternativ können für die beiden höchsten Gangstufen insbesondere Mehrfach-Synchronisiereinrichtungen mit Carbon-Reibflächen eingesetzt werden.

Mindestens eine der Reibflächen der Synchronisiereinrichtung für die beiden größten Gangstufen besteht vorzugsweise aus Carbon. Vorzugsweise weisen alle Reibflächen der beiden größten Gangstufen Carbon auf oder bestehen aus Carbon. Mindestens eine der Reibflächen der Synchronisiereinrichtungen für die unteren Gangstufen besteht vorzugsweise aus Messing. Vorzugsweise weisen alle Reibflächen der Synchronisiereinrichtungen der unteren Gangstufen Messing auf oder bestehen aus Messing. Die Synchronisiereinrichtungen können für alle Gangstufen als Einfach-Synchronisiereinrichtungen ausgebildet sein, wie sie bereits beschrieben wurde. Alternativ können die Synchronisiereinrichtungen vorzugsweise der beiden größten Gangstufen als Mehrfach-Synchronisiereinrichtungen ausgebildet sein.

Carbon bezeichnet insbesondere einen kohlenstofffaserverstärkten Kunststoff. Kohlenstofffasern können dabei vorzugsweise in mehreren Lagen als Verstärkung in eine Kunststoffmatrix eingebettet sein. Der kohlenstofffaserverstärkten Kunststoff kann dabei auf den Körper des Synchronrings, insbesondere auf den entsprechenden Konus, aufgeklebt sein.

Beim Hochschalten der unteren Gangstufen - hier der 1. bis 5. Gangstufe - wird zur Synchronisierung von deren Getriebeeingangswelle EW1 bzw. EW2 eine einer anderen, höheren Gangstufe zugeordnete Synchronisiereinrichtung eingesetzt.

Die eingangs genannten Nachteile sind nun ferner für das Verfahren dadurch vermieden, dass beim Hochschalten der unteren Gangstufen zur Synchronisierung von der jeweiligen Getriebeeingangswelle EW1 bzw. EW2 eine der beiden Synchronisiereinrichtungen der beiden höchsten Gangstufen eingesetzt bzw. verwendet wird. Beim Runterschalten wird die jeweilige der zu schaltenden Gangsstufe zugeordnete Synchronisiereinrichtung verwendet. Beim Runterschalten bzw. bei den Rückschaltungen mit Hilfe der Synchronisiereinrichtungen (Einfach-Synchronisiereinrichtungen) in die unteren Gänge kann eine der Reibkupplungen zur Unterstützung des Abbaus der Drehzahldifferenz mit genutzt werden. Diese zuvor genannten Arten der Rückschaltungen werden vorzugsweise durch ein gemeinsame Steuer- bzw. Regelverfahren mit den zuvor genannten Hochschaltungen realisiert, können aber auch unabhängig davon alleine für sich realisiert werden, also in einem Verfahren, dass dann nur die Rückschaltungen realisiert.

Bei Rückschaltungen ist ein Beschleunigen der jeweiligen Eingangswelle EW1 bzw. EW2 erforderlich. Mit den Synchronisiereinrichtungen der sechsten und siebten Gangstufe ist es durch die kleine Übersetzung der sechsten und siebten Gangstufe nicht möglich, eine höhere Drehzahl als die des Losrades 14 oder 16 zu erreichen. Die entsprechende Getriebeeingangswelle EW1 bzw. EW2 wird vorzugsweise mit einer zumindest teilweise geschlossenen Reibkupplung K1 bzw. K2 über erhöhten Schlupf bis auf die Motordrehzahl beschleunigt. Die gewählte Gangstufe wird bei Gleichlauf des entsprechenden Losrades 6, 7, 8, 9, 15, 17 mit der entsprechenden Triebwelle TW1, TW2 geschaltet.

Insbesondere wird der Drehzahlgradient bzw. der Drehzahlunterschied überwacht. Durch die Überwachung des Drehzahlgradienten wird bei Erreichen eines insbesondere voreingestellten Grenzwertes der Schaltvorgang durchgeführt. Der Schaltvorgang wird mit den entsprechenden Synchronisiereinrichtungen durchgeführt. Insbesondere wird die Runterschaltung durchgeführt, wenn die Differenzdrehzahl gleich 0 ist bzw. gering ist. Durch ein Beschleunigen der Triebwellen TW1 bzw. TW2 über die Reibkupplung K1, K2 und damit ein Schalten bei Gleichlauf der Triebwellen TW1, TW2 mit den entsprechenden Losrädern 6 bis 9 bzw. 14 bis 17, kann ein lautes Geräusch vermieden werden, welches entsteht, wenn eine Gangstufe über die Dachschrägen der Schiebemuffen und der Kurzverzahnung der Kupplungskörper synchronisiert wird.

Rückschaltungen bzw. Runterschaltungen werden vorzugsweise bei geschlossener bzw. schlupfender Reibkupplung K1, K2 durchgeführt. Rückschaltungen sind als Zugrückschaltungen, Zwischengasrückschaltungen oder Ausrollrückschaltungen möglich. Als Zugrückschaltungen werden Rückschaltungen unter Antriebsmoment bezeichnet. Bei Zugrückschaltungen wird ein Antriebsmoment während der Rückschaltung übertragen. Die Zugrückschaltungen und die Zwischengasrückschaltungen laufen insbesondere nach folgendem Schema ab: Die Zugschaltungen und Zwischengasrückschaltungen dürfen im folgenden anhand einer Rückschaltung von der vierten Gangstufe in die dritte Gangstufe erläutert werden. Das Kraftfahrzeug fährt, wobei der Leistungsfluss über die geschlossene Reibkupplung K2 erfolgt. Der Leistungsfluss wird von der Reibkupplung K2 auf das Festrad 4 übertragen. Das Festrad 4 treibt das der vierten Gangstufe zugeordnete Losrad 8 an, wobei die entsprechende Synchronisiereinrichtung eine drehfeste Verbindung zwischen dem Losrad 8 und der Triebwelle TW1 bereitstellt. Die entsprechende Gangstufe des Zielganges, hier der dritten Gangstufe ist dabei nicht eingelegt. D. h. hier ist das Losrad 15 nicht drehfest mit der Triebwelle TW2 verbunden. Der Zielgang des anderen Teilgetriebes der Triebwelle TW2 ist herausgenommen.

Anschließend wird die Kupplung K1 des Teilgetriebes des Zielganges geschlossen. Die Eingangswelle EW1 wird hierdurch beschleunigt. Die Eingangswellendrehzahl ist dadurch identisch mit der Motordrehzahl. Anschließend wird die Reibkupplung K2 leicht geöffnet. Gleichzeitig.erhöht sich die Motordrehzahl, bis die Zieldrehzahl der dritten Gangstufe erreicht ist. Hierdurch wird das Losrad 15 beschleunigt, bis das Losrad 15 im wesentlichen die gleiche Drehgeschwindigkeit wie die Triebwelle TW2 aufweist. Der Zielgang, hier die dritte Gangstufe kann mit der entsprechenden Synchronisiereinrichtung bei einem Gleichlauf bzw. annähernden Gleichlauf eingelegt werden. Die Reibkupplung K2 der ursprünglichen Gangstufe 4 kann nun vollständig geöffnet werden. Das Kraftfahrzeug fährt, wobei der Leistungsfluss über die geschlossene Kupplung K1 und die dritte Gangstufe erfolgt.

Im folgenden darf eine Ausrollrückschaltung näher beschrieben werden.

Bei einer Ausrollrückschaltung befindet sich das Doppelkupplungsgetriebe 1 im Leerlauf. Eine Rückschaltung von der vierten Gangstufe in die dritte Gangstufe läuft bspw. wie folgt ab:
Das Kraftfahrzeug fährt, wobei die Kupplung K2 wie oben beschrieben geschlossen ist und der Leistungsfluss über das drehfest mit der Triebwelle TW1 verbundene Losrad 8 erfolgt. Die Gangstufen der Triebwelle TW2 sind alle herausgenommen. Insbesondere ist auch die Gangstufe des Zielganges, hier der dritten Gangstufe herausgenommen. Nun wird die Kupplung K1 geschlossen, wodurch die Getriebeeingangswelle EW1 auf die Motordrehzahl beschleunigt wird. Die entsprechenden Losräder 14, 15 der zweiten Triebwelle TW2 werden hierdurch beschleunigt. Nun wird die Reibkupplung K2, geöffnet, wobei diese Reibkupplung K2 der ursprünglichen vierten Gangstufe zugeordnet ist. Die Motordrehzahl wird nun nicht erhöht. Die Motordrehzahl ist insbesondere gleich der Leerlaufdrehzahl. Wenn durch das Ausrollen des Kraftfahrzeuges die Geschwindigkeit der Triebwelle TW2 sich an die Geschwindigkeit des Losrades 15 der dritten Gangstufe bzw. des Zielganges angepasst hat, kann mittels der entsprechenden Synchronisiereinrichtung das Losrad 15 mit der Triebwelle TW2 drehfest verbunden werden. Beim Ausrollen verringert sich die Fahrgeschwindigkeit bis zum Gleichlauf zwischen der Triebwelle TW2 und dem Losrad 15 der dritten Gangstufe. Wenn der Gleichlauf erreicht ist, wird der Zielgang eingelegt. Das Kraftfahrzeug fährt mit einem Leistungsfluss über die geschlossene Kupplung K1 sowie das drehfest verbundene Losrad 15 mit der Triebwelle TW2. Ausrollrückschaltungen sind möglich, da die Drehzahl der Triebwellen TW1, TW2 durch das Verringern der Fahrgeschwindigkeit sich der Schaltdrehzahl der niedrigeren Zielgangstufe nähert. Zu diesem Zeitpunkt kann der gewählte Zielgang eingelegt werden.

Im Gegensatz zu Ausrollrückschaltungen unterscheiden sich Zugrückschaltungen und Zwischengasrückschaltungen durch das Beschleunigen der Getriebeeingangswellen EW1, EW2 zum Herstellen des Gleichlaufs zwischen den entsprechenden Losrädern 6 bis 9 bzw. 14 bis 17 und der Triebwelle TW1, TW2. Das Doppelkupplungsgetriebe 1 führt eine Zugrückschaltung aus, wenn der Fahrer durch Betätigen des Fahrpedals eine Rückschaltung anfordert. Die Motordrehzahl wird dabei erhöht.

Eine Zwischengasrückschaltung hingegen erfolgt durch einen Eingriff in das Motormanagement. Die Motordrehzahl wird dabei unmerklich für den Fahrer bei der Rückschaltung bis auf die Zieldrehzahl des Zielganges erhöht, ohne dass der Fahrer selbst das Fahrpedal betätigen muss.

Das Beschleunigen der Getriebeeingangswellen EW1 bzw. EW2 mit Reibkupplungen K1, K2 beim Rückschalten kann wie beschrieben vor dem Einlegen der Gangstufe bzw. vor der endgültigen Synchronisierung mit den Synchronisiereinrichtungen erfolgen. In anderen Worten, es ist eine sequentielle Synchronisierung der Getriebeeingangswellen bzw. der entsprechend angetriebenen Losräder 6 bis 9 bzw. 14 bis 17 mittels der Reibkupplung K1 und K2 ermöglicht, wobei anschließend eine endgültige Synchronisierung mit den Synchronisiereinrichtungen erfolgt. In alternativer Ausgestaltung können die Losräder 6 bis 9 bzw. 14 bis 17 des entsprechenden niedrigeren Zielgangs gleichzeitig durch Schließen der entsprechenden Reibkupplung K1 bzw. K2 und durch Einsatz der entsprechenden Synchronisiereinrichtung beschleunigt werden.

Beim Hochschalten wird hier dabei entweder die Synchronisiereinrichtung der sechsten oder der siebten Gangstufe verwendet. Beim Herunterschalten bspw. in die dritte Gangstufe wird die jeweilige der dritten Gangstufe zugeordnete Synchronisiereinrichtung verwendet.

Zum Hochschalten können die Synchronisiereinrichtungen mit den Carbon-Reibflächen eingesetzt werden, insbesondere können die Getriebeeingangswellen EW1 bzw. EW2 funktional wirksam mit den Carbon-Reibflächen abgebremst werden. Die Messing-Reibflächen sind hier dadurch entlastet, dass nur Rückschaltvorgänge über die Messing-Reibflächen vorgenommen werden, wobei die jeweiligen Getriebeeingangswellen EW1 bzw. EW2 beschleunigt werden müssen.

Die eingangs genannten Nachteile sind daher vermieden und entsprechende Vorteile erzielt.

### Bezugszeichenliste

- 1: Doppelkupplungsgetriebe
- 2: Festrad
- 3: Festrad
- 4: Festrad
- 5: Festrad
- 6: Losrad
- 7: Losrad
- 8: Losrad
- 9: Losrad
- 10: Zwischenwelle
- 11: Zahnrad
- 12: Festrad
- 13: Festrad
- 14: Losrad
- 15: Losrad
- 16: Losrad
- 17: Losrad
- 18: Achsabtriebsrad
- 19: Achsabtrieb
- 20: Differentialgetriebe
- 21: Antriebsräder
- 22: Doppelkupplung
- 23: Kurbelwelle

- EW1: Getriebeeingangswelle
- EW2: Getriebeeingangswelle
- TW1: Triebwelle
- TW2: Triebwelle
- K1: Reibkupplung
- K2: Reibkupplung
- R: Rückwärtsgangstufe

## Patentansprüche

1. Doppelkupplungsgetriebe (1) für ein Kraftfahrzeug, mit einer ersten und mit einer zweiten Getriebeeingangswelle (EW1, EW2) sowie mit mindestens einer Triebwelle, insbesondere mit einer ersten und mit einer zweiten Triebwelle (TW1, TW2), wobei der ersten Getriebeeingangswelle (EW1) eine erste Reibkupplung (K1) und bestimmte Gangstufen, vzw. eine erste, eine dritte, eine fünfte und/oder eine siebte Gangstufe, zugeordnet sind und der zweiten Getriebeeingangswelle (EW2) eine zweite Reibkupplung (K2) und bestimmte andere Gangstufen, vzw. eine zweite, eine vierte und/oder eine sechste Gangstufe zugeordnet sind, wobei die Gangstufen durch mehrere jeweils die Eingangswelle (EW1, EW2) und die Triebwelle (TW1 bzw. TW2) verbindende Zahnradpaare gebildet sind, wobei die Zahnradpaare durch jeweils ein Festrad (2 bis 5, 12, 13) und ein Losrad (6 bis 9, 14 bis 17) gebildet sind, wobei jedem Losrad (6 bis 9, 14 bis 17) eine Synchronisiereinrichtung zugeordnet ist, und wobei die Synchronisiereinrichtungen mehrere zusammenwirkende Reibflächen aufweisen, **dadurch gekennzeichnet, dass** für die beiden größten Gangstufen jeweils eine Mehrfach-Synchronisiereinrichtung als Synchronisiereinrichtung und für die unteren Gangstufen jeweils eine Einfach-Synchronisiereinrichtung als Synchronisiereinrichtung vorgesehen sind, wobei die Mehrfach-Synchronisiereinrichtung mehrere zusammenwirkende Reibflächenpaare und die Einfach-Synchronisiereinrichtung ein zusammenwirkendes Reibflächenpaar aufweist.

2. Doppelkupplungsgetriebe nach Anspruch 1, **dadurch gekennzeichnet, dass** die Mehrfach-Synchronisiereinrichtungen als Doppel-Synchronisiereinrichtungen ausgebildet sind.

3. Doppelkupplungsgetriebe nach einem der vorstehenden Ansprüche, **dadurch gekennzeichnet, dass** die Mehrfach-Synchronisiereinrichtungen einen inneren Synchronring und einen äußeren Synchronring sowie mindestens einen Zwischenring zwischen dem äußeren Synchronring und dem inneren Synchronring aufweisen.

4. Doppelkupplungsgetriebe nach einem der vorstehenden Ansprüche, **dadurch gekennzeichnet, dass** sieben Gangstufen für die Vorwärtsfahrt vorgesehen sind, wobei für die sechste und siebte Gangstufe die Mehrfach-Synchronisiereinrichtungen als Synchronisiereinrichtungen und für die erste, zweite, dritte, vierte und fünfte Gangstufe die Einfach-Synchronisiereinrichtungen als Synchronisiereinrichtungen vorgesehen sind.

5. Doppelkupplungsgetriebe (1) für ein Kraftfahrzeug, mit einer ersten und einer zweiten Getriebeeingangswelle (EW1, EW2) sowie mit mindestens einer Triebwelle, insbesondere mit einer ersten und mit einer zweiten Triebwelle (TW1, TW2), wobei der ersten Getriebeeingangswelle (EW1) eine erste Reibkupplung (K1) und bestimmte Gangstufen, vzw. eine erste, eine dritte, eine fünfte und/oder eine siebte Gangstufe, zugeordnet sind und der zweiten Getriebeeingangswelle (EW2) eine zweite Reibkupplung (K2) und bestimmte andere Gangstufen, vzw. eine zweite, eine vierte und/oder eine sechste Gangstufe, zugeordnet sind, wobei die Gangstufen durch mehrere jeweils die Getriebeeingangswelle (EW1, EW2) und die Triebwelle (TW1, TW2) verbindende Zahnradpaare gebildet sind, wobei die Zahnradpaare durch jeweils ein Festrad (2 bis 5, 12, 13) und ein Losrad (6 bis 9, 14 bis 17) gebildet sind, wobei jedem den Losrädern (6 bis 9, 14 bis 17) eine Synchronisiereinrichtung zugeordnet ist, und wobei die Synchronisiereinrichtungen mehrere zusammenwirkende Reibflächen aufweisen, **dadurch gekennzeichnet,** das jeweils mindestens eine der Reibflächen der Synchronisiereinrichtungen für die beiden größten Gangstufen Carbon aufweist und jeweils mindestens eine der Reibflächen der Synchronisiereinrichtungen für die unteren Gangstufen Messing aufweist.

6. Doppelkupplungsgetriebe nach Anspruch 5, **dadurch gekennzeichnet, dass** für die beiden größten Gangstufen eine Einfach-Synchronisiereinrichtung als Synchronisiereinrichtung vorgesehen sind, wobei die Einfach-Synchronisiereinrichtung ein zusammenwirkendes Reibflächenpaar aufweist.

7. Doppelkupplungsgetriebe nach einem der Ansprüche 1 bis 4 oder nach dem Anspruch 6, **dadurch gekennzeichnet, dass** die Einfach-Synchronisiereinrichtungen jeweils einen äußeren Synchronring und einen drehfest mit dem zugehörigen Losrad verbundenen Kupplungskörper mit einem Gegenkonus aufweisen, wobei der Synchronring und der Gegenkonus zusammenwirkende Reibflächen aufweisen.

8. Doppelkupplungsgetriebe nach einem der Ansprüche 1 bis 7, **dadurch gekennzeichnet, dass** mindestens eine der Reibflächen der Synchronisiereinrichtung für die beiden größten Gangstufen aus Carbön bestehen.

9. Doppelkupplungsgetriebe nach einem der Ansprüche 1 bis 8, **dadurch gekennzeichnet, dass** mindestens eine der Reibflächen der Synchronisiereinrichtung für die unteren Gangstufen aus Messing bestehen.

10. Doppelkupplungsgetriebe nach einem der Ansprüche 1 bis 9, **dadurch gekennzeichnet, dass** sieben Gangstufen für die Vorwärtsfahrt vorgesehen sind.

11. Doppelkupplungsgetriebe nach einem der Ansprüche 1 bis 10, **dadurch gekennzeichnet, dass** zusätzlich eine Rückwärtsgangstufe (R) vorgesehen ist.

12. Doppelkupplungsgetriebe nach einem der Ansprüche 1 bis 11, **dadurch gekennzeichnet, dass** ein Lock-System vorgesehen ist, wobei, wenn eine Gangstufe eingelegt ist, die anderen Gangstufen verriegelt sind.

13. Doppelkupplungsgetriebe nach einem der Ansprüche 1 bis 12, **dadurch gekennzeichnet, dass** zwei Triebwellen (TW1, TW2) vorgesehen sind.

14. Doppelkupplungsgetriebe nach einem der Ansprüche 1 bis 13, **dadurch gekennzeichnet, dass** die Losräder (6 bis 9, 14 bis 17) und die Synchronisiereinrichtungen auf den Triebwellen (TW1, TW2) angeordnet und die Festräder (2 bis 5, 12, 13) drehfest auf den Getriebeeingangswellen (EW1, EW2) angeordnet sind.

15. Verfahren zur Steuerung des Doppelkupplungsgetriebes (1) nach einem der vorstehenden Ansprüche, wobei beim Hochschalten der unteren Gangstufen zur Synchronisierung der jeweiligen Getriebeeingangswelle (EW1, EW2) eine einer anderen, höheren Gangstufe zugeordnete Synchronisiereinrichtung eingesetzt bzw. verwendet wird, **dadurch gekennzeichnet, dass** beim Hochschalten der unteren Gangstufen zur Synchronisierung von der jeweiligen Getriebeeingangswelle (EW1 bzw. EW2) eine der beiden Synchronisiereinrichtungen der beiden höchsten Gangstufen eingesetzt bzw. verwendet wird.

16. Verfahren nach Anspruch 15, **dadurch gekennzeichnet, dass** beim Runterschalten die jeweilige der zu schaltenden Gangstufe zugeordnete Synchronisiereinrichtung verwendet wird.

17. Verfahren nach Anspruch 15 oder 16, **dadurch gekennzeichnet, dass** beim Runterschalten eine der Reibkupplungen (K1, K2) zur Unterstützung des Abbaus der Differenzdrehzahl genutzt wird.

## Claims

1. Dual clutch transmission (1) for a motor vehicle, having a first and a second transmission input shaft (EW1, EW2) and having at least one driveshaft, in particular having a first and a second driveshaft (TW1, TW2), wherein the first transmission input shaft (EW1) is assigned a first friction clutch (K1) and certain gears, preferably a first, a third, a fifth and/or a seventh gear, and the second transmission input shaft (EW2) is assigned a second friction clutch (K2) and certain other gears, preferably a second, a fourth and/or a sixth gear, wherein the gears are formed by a plurality of gearwheel pairs which in each case connect the input shaft (EW1, EW2) to the driveshaft (TW1 and/or TW2), wherein the gearwheel pairs are formed by in each case one fixed gearwheel (2 to 5, 12, 13) and one loose gearwheel (6 to 9, 14 to 17), wherein each loose gearwheel (6 to 9, 14 to 17) is assigned a synchronization unit, and wherein the synchronization units have a plurality of interacting friction surfaces, **characterized in that** in each case one multiple synchronization unit is provided as a synchronization unit for the two highest gears, and in each case one single synchronization unit is provided as a synchronization unit for the lower gears, wherein the multiple synchronization unit has multiple interacting friction surface pairs, and the single synchronization unit has one interacting friction surface pair.

2. Dual clutch transmission according to Claim 1, **characterized in that** the multiple synchronization units are in the form of double synchronization units.

3. Dual clutch transmission according to one of the preceding claims, **characterized in that** the multiple synchronization units have an inner synchronizing ring and an outer synchronizing, ring and at least one intermediate ring between the outer synchronizing ring and the inner synchronizing ring.

4. Dual clutch transmission according to one of the preceding claims, **characterized in that** seven gears for forward travel are provided, wherein the multiple synchronization units are provided as synchronization units for the sixth and the seventh gear, and the single synchronization units are provided as synchronization units for the first, second, third, fourth and fifth gear.

5. Dual clutch transmission (1) for a motor vehicle, having a first and a second transmission input shaft (EW1, EW2) and having at least one driveshaft, in particular having a first and a second driveshaft (TW1, TW2), wherein the first transmission input shaft (EW1) is assigned a first friction clutch (K1) and certain gears, preferably a first, a third, a fifth and/or a seventh gear, and the second transmission input shaft (EW2) is assigned a second friction clutch (K2) and certain other gears, preferably a second, a fourth and/or a sixth gear, wherein the gears are formed by a plurality of gearwheel pairs which in each case connect the transmission input shaft (EW1, EW2) to the driveshaft (TW1 and/or TW2), wherein the gearwheel pairs are formed by in each case one fixed gearwheel (2 to 5, 12, 13) and one loose gearwheel (6 to 9, 14 to 17), wherein each of the loose gearwheels (6 to 9, 14 to 17) is assigned a synchronization unit, and wherein the synchronization units have a plurality of interacting friction surfaces, **characterized in that** in each case at least one of the friction surfaces of the synchronization units for the two highest gears has carbon, and in each case at least one of the friction surfaces of the synchronization units for the lower gears has brass.

6. Dual clutch transmission according to Claim 5, **characterized in that** a single synchronization unit is provided as a synchronization unit for the two highest gears, wherein the single synchronization unit has one interacting friction surface pair.

7. Dual clutch transmission according to one of Claims 1 to 4 or according to Claim 6, **characterized in that** the single synchronization units have in each case one outer synchronizing ring and one clutch body which is connected rotationally conjointly to the associated loose gearwheel and which has a counterpart cone; wherein the synchronizing ring and the counterpart cone have interacting friction surfaces.

8. Dual clutch transmission according to one of Claims 1 to 7, **characterized in that** at least one of the friction surfaces of the synchronization unit for the two highest gears is composed of carbon.

9. Dual clutch transmission according to one of Claims 1 to 8, **characterized in that** at least one of the friction surfaces of the synchronization unit for the lower gears is composed of brass.

10. Dual clutch transmission according to one of Claims 1 to 9, **characterized in that** seven gears for forward travel are provided.

11. Dual clutch transmission according to one of Claims 1 to 10, **characterized in that** one reverse gear (R) is additionally provided.

12. Dual clutch transmission according to one of Claims 1 to 11, **characterized in that** a lock system is provided, wherein, when one gear is engaged, the other gears are locked.

13. Dual clutch transmission according to one of Claims 1 to 12, **characterized in that** two driveshafts (TW1, TW2) are provided.

14. Dual clutch transmission according to one of Claims 1 to 13, **characterized in that** the loose gearwheels (6 to 9, 14 to 17) and the synchronization units are arranged on the driveshafts (TW1, TW2) and the fixed gearwheels (2 to 5, 12, 13) are arranged rotationally conjointly on the transmission input shafts (EW1, EW2).

15. Method for controlling the dual clutch transmission (1) according to one of the preceding claims, wherein, during upshifting of the lower gears, for synchronization of the' respective transmission input shaft (EW1, EW2), use is made of a synchronization unit assigned to another, higher gear, **characterized in that**, during upshifting of the lower gears, for synchronization of the respective transmission input shaft (EW1 or EW2), use is made of one of the two synchronizing units of the two highest gears.

16. Method according to Claim 15, **characterized in that**, during downshifting, use is made of the respective synchronization unit assigned to the gear to be engaged.

17. Method according to Claim 15 or 16, **characterized in that**, during downshifting, one of the friction clutches (K1, K2) is used to assist in eliminating the rotational speed difference.

## Revendications

1. Transmission à double embrayage (1) pour un véhicule automobile, comprenant un premier et un deuxième arbre d'entrée de boîte de vitesses (EW1, EW2) ainsi qu'au moins un arbre d'entraînement, notamment un premier et un deuxième arbre d'entraînement (TW1, TW2), le premier arbre d'entrée de boîte de vitesses (EW1) étant associé à un premier embrayage à friction (K1) et à des rapports de transmission déterminés, de préférence un premier, un troisième, un cinquième et/ou un septième rapport de transmission, et le deuxième arbre d'entrée de boîte de vitesses (EW2) étant associé à un deuxième embrayage à friction (K2) et à d'autres rapports de transmission déterminés, de préférence un deuxième, un quatrième et/ou un sixième rapport de transmission, les rapports de transmission étant formés par plusieurs paires de pignons reliant à chaque fois l'arbre d'entrée (EW1, EW2) et l'arbre d'entraînement (TW1 respectivement TW2), les paires de pignons étant formées à chaque fois par un pignon fixe (2 à 5, 12, 13) et un pignon fou (6 à 9, 14 à 17), à chaque pignon fou (6 à 9, 14 à 17) étant associé un dispositif de synchronisation, et les dispositifs de synchronisation présentant plusieurs surfaces de friction coopérantes, **caractérisée en ce que** pour les deux rapports de transmission supérieurs, à chaque fois un dispositif de synchronisation multiple est prévu en tant que dispositif de synchronisation et pour les rapports de transmission inférieurs, à chaque fois un dispositif de synchronisation simple est prévu en tant que dispositif de synchronisation, le dispositif de synchronisation multiple présentant plusieurs paires de surfaces de friction coopérantes et le dispositif de synchronisation simple présentant une paire de surfaces de friction coopérantes.

2. Transmission à double embrayage selon la revendication 1, **caractérisée en ce que** les dispositifs de synchronisation multiples sont réalisés sous forme de dispositifs de synchronisation doubles.

3. Transmission à double embrayage selon l'une quelconque des revendications précédentes, **caractérisée en ce que** les dispositifs de synchronisation multiples présentent une bague de synchronisation interne et une bague de synchronisation externe ainsi qu'au moins une bague intermédiaire entre la bague de synchronisation externe et la bague de synchronisation interne.

4. Transmission à double embrayage selon l'une quelconque des revendications précédentes, **caractérisée en ce que** sept rapports de transmission sont prévus pour la conduite en marche avant, les dispositifs de synchronisation multiples étant prévus en tant que dispositifs de synchronisation pour les sixième et septième rapports de transmission et les dispositifs de synchronisation simples étant prévus en tant que dispositifs de synchronisation pour les premier, deuxième, troisième, quatrième, et cinquième rapports de transmission.

5. Transmission à double embrayage (1) pour un véhicule automobile, comprenant un premier et un deuxième arbre d'entrée de boîte de vitesses (EW1, EW2) ainsi qu'au moins un arbre d'entraînement, notamment un premier et un deuxième arbre d'entraînement (TW1, TW2), le premier arbre d'entrée de boîte de vitesses (EW1) étant associé à un premier embrayage à friction (K1) et à des rapports de transmission déterminés, de préférence un premier, un troisième, un cinquième et/ou un septième rapport de transmission, et le deuxième arbre d'entrée de boîte de vitesses (EW2) étant associé à un deuxième embrayage à friction (K2) et à d'autres rapports de transmission déterminés, de préférence un deuxième, un quatrième et/ou un sixième rapport de transmission, les rapports de transmission étant formés par plusieurs paires de pignons reliant à chaque fois l'arbre d'entrée de boîte de vitesses (EW1, EW2) et l'arbre d'entraînement (TW1, TW2), les paires de pignons étant formées à chaque fois par un pignon fixe (2 à 5, 12, 13) et un pignon fou (6 à 9, 14 à 17), à chaque pignon fou (6 à 9, 14 à 17) étant associé un dispositif de synchronisation, et les dispositifs de synchronisation présentant plusieurs surfaces de friction coopérantes, **caractérisée en ce qu'**à chaque fois au moins l'une des surfaces de friction des dispositifs de synchronisation pour les deux rapports de transmission supérieurs présente du carbone et à chaque fois au moins l'une des surfaces de friction des dispositifs de synchronisation pour les rapports de transmission inférieurs présente du laiton.

6. Transmission à double embrayage selon la revendication 5, **caractérisée en ce qu'**un dispositif de synchronisation simple est prévu en tant que dispositif de synchronisation pour les deux rapports de transmission supérieurs, le dispositif de synchronisation simple présentant une paire de surfaces de friction coopérantes.

7. Transmission à double embrayage selon l'une quelconque des revendications 1 à 4 ou selon la revendication 6, **caractérisée en ce que** les dispositifs de synchronisation simples présentent à chaque fois une bague de synchronisation extérieure et un corps d'embrayage connecté de manière solidaire en rotation au pignon fou associé avec un cône conjugué, la bague de synchronisation et le cône conjugué présentant des surfaces de friction coopérantes.

8. Transmission à double embrayage selon l'une quelconque des revendications précédentes 1 à 7, **caractérisée en ce qu'**au moins l'une des surfaces de friction du dispositif de synchronisation pour les deux rapports de transmission supérieurs est en carbone.

9. Transmission à double embrayage selon l'une quelconque des revendications 1 à 8, **caractérisée en ce qu'**au moins l'une des surfaces de friction du dispositif de synchronisation pour les rapports de transmission inférieurs est en laiton.

10. Transmission à double embrayage selon l'une quelconque des revendications 1 à 9, **caractérisée en ce que** sept rapports d'embrayage sont prévus pour la conduite en marche avant.

11. Transmission à double embrayage selon l'une quelconque des revendications 1 à 10, **caractérisée en ce qu'**il est en outre prévu un rapport de transmission de marche arrière (R).

12. Transmission à double embrayage selon l'une quelconque des revendications 1 à 11, **caractérisée en ce qu'**il est prévu un système de verrouillage, dans lequel, lorsqu'un rapport de transmission est enclenché, les autres rapports de transmission sont verrouillés.

13. Transmission à double embrayage selon l'une quelconque des revendications 1 à 12, **caractérisée en ce que** deux arbres d'entraînement (TW1, TW2) sont prévus.

14. Transmission à double embrayage selon l'une quelconque des revendications 1 à 13, **caractérisée en ce que** les pignons fous (6 à 9, 14 à 17) et les dispositifs de synchronisation sont disposés sur l'arbre d'entraînement (TW1, TW2) et les pignons fixes (2 à 5, 12, 13) sont disposés de manière solidaire en rotation sur les arbres d'entrée de boîte de vitesses (EW1, EW2).

15. Procédé de commande de la transmission à double embrayage (1) selon l'une quelconque des revendications précédentes, dans lequel lors du passage à une vitesse supérieure des rapports de transmission inférieurs on utilise, pour la synchronisation de l'arbre d'entrée de boîte de vitesses respectif (EW1, EW2), un dispositif de synchronisation associé à un autre rapport de transmission supérieur, **caractérisé en ce que** lors du passage à une vitesse supérieure des rapports de transmission inférieurs on utilise, pour la synchronisation de l'arbre d'entrée de boîte de vitesses respectif (EW1, respectivement EW2), l'un des deux dispositifs de synchronisation des deux rapports de transmission supérieurs.

16. Procédé selon la revendication 15, **caractérisé en ce que** lors du rétrogradage, l'on utilise le dispositif de synchronisation respectivement associé aux rapports de transmission à enclencher.

17. Procédé selon la revendication 15 ou 16, **caractérisé en ce que** lors du rétrogradage, on utilise l'un des embrayages à friction (K1, K2) pour supporter la diminution du régime différentiel.
